# EUROPEAN PATENT APPLICATION

(11) **EP 4 459 848 A1**
(43) Date of publication of application: **06.11.2024**
(21) Application number: 24171046.6
(22) Date of filing: 18.04.2024
(51) Int. Cl.: H02K 5/20, H02K 9/19, H02K 3/24

(54) **ELECTRIC MOTOR COOLING ARRANGEMENT, OIL SPRAY RING, ELECTRIC MOTOR AND VEHICLE**

(30) Priority: 21.04.2023 CN 202310438095
(71) Applicant: Valeo eAutomotive Germany GmbH, 91056 Erlangen (DE)
(72) Inventor: ZHANG, Xuejun, 91056 Erlangen (DE); ZHU, Wei, 91056 Erlangen (DE); FAN, Pengcheng, 91056 Erlangen (DE)
(74) Representative: Valeo Powertrain Systems

(57) **Abstract**

The present disclosure relates to an electric motor cooling arrangement comprising an end oil spray assembly arranged at both ends of a stator of an electric motor, being used to spray cooling oil towards a winding head of the stator to cool the winding head, and a water cooling assembly arranged to surround at least the core part of the stator, wherein cooling water circulates in the water cooling assembly to cool the core part of the stator.

## Description

### TECHNICAL FIELD

The present disclosure relates to an electric motor cooling arrangement and an oil spray ring for spraying cooling oil towards a winding head of a stator of an electric motor. The present disclosure further relates to an electric motor comprising such an electric motor cooling arrangement or oil spray ring, as well as a vehicle comprising such an electric motor.

### BACKGROUND

The electric motors used to drive vehicles usually have greater power and generate a large amount of heat when running continuously. If heat dissipation is insufficient, the heat generated will accumulate inside the electric motor, causing the temperature of the electric motor to rise and affecting the reliability and performance of the electric motor.

A stator is a major heat generating component of an electric motor, which comprises a core part and a winding. The winding is divisible into a winding main body that extends axially within a winding slot of the core part and a winding head that extends beyond the core part at the two axial ends of the electric motor. The electric motor cooling arrangement needs to be able to simultaneously cool the core part and winding head of the stator in order to fully cool the stator.

Depending on cooling media, existing electric motors include water-cooled electric motors and oil-cooled electric motors. A water-cooled electric motor comprises a pipeline that surrounds the core part of a stator and circulates cooling water therein. With a water-cooled electric motor, the core part is cooled effectively, but a winding head of the stator cannot be cooled directly. An oil-cooled electric motor comprises a cooling oil pipeline, an internal oil passage, and an oil spray ring that is provided at an axial end. The oil spray ring can spray cooling oil towards a winding head, thereby directly cooling the winding head. However, the cooling effect of an oil-cooled electric motor on the core part of a stator is not as good as that of a water-cooled electric motor. The cooling oil pipeline of an oil-cooled electric motor usually further comprises a part located on the radial outside of the core part of a stator, which increases the radial size of the electric motor. Moreover, a stator typically comprises a plurality of windings stacked and wound in a radial direction. At a winding head, an existing oil spray ring can spray cooling oil only towards the outer winding located radially outside, thus unable to effectively cool an inner winding located radially inside.

Therefore, there is a need for an electric motor cooling arrangement that can effectively cool the core part and winding head of a stator without an increase in the radial size of the electric motor, and an oil spraying device that can cool both outer and inner windings at a winding head.

### SUMMARY

Considering the problems and needs mentioned above, the present disclosure proposes a novel electric motor cooling arrangement and oil spray ring, which solves the above problems and brings other technical effects due to the adoption of the following technical features.

An electric motor cooling arrangement according to the present disclosure comprises an end oil spray assembly arranged at both ends of a stator of an electric motor, being used to spray cooling oil towards a winding head of the stator to cool the winding head, and a water cooling assembly arranged to surround at least the core part of the stator, wherein cooling water circulates in the water cooling assembly to cool the core part of the stator.

An objective of the present disclosure is to provide an electric motor cooling arrangement that can cool the core part and a winding head of a stator without an increase in the radial size of the electric motor. An electric motor cooling arrangement according to the present disclosure comprises an end oil spray assembly and a water cooling assembly to cool the winding head and the core part respectively. Therefore, the electric motor cooling arrangement, as a result of replacing, with a water cooling assembly, a cooling oil pipeline and an oil spray port that are located on the radial outside of the core part, can cool the core part without an increase in the radial size of the electric motor. In addition, the end oil spray assembly and the water cooling assembly of the electric motor cooling arrangement use cooling oil and cooling water as cooling media, respectively, which are independent of each other, so the flow rates of cooling oil and cooling water are adjustable according to the heating situation of the windings and core part of a stator, thus improving the cooling efficiency.

An electric motor cooling arrangement according to the present disclosure may further be provided with one or more of the following features individually or in combination.

According to an embodiment of the present disclosure, the end oil spray assembly simultaneously sprays cooling oil towards the outer winding and inner winding of the winding head. Therefore, the electric motor cooling arrangement can effectively cool both the outer winding and inner winding simultaneously.

According to an embodiment of the present disclosure, the water cooling assembly further surrounds at least a portion of the winding head for water return and to increase the design margin of the water cooling assembly.

According to an embodiment of the present disclosure, the water cooling assembly comprises a water cooling channel provided on the housing of the electric motor. As a result of this structure, with an electric motor cooling arrangement according to the present disclosure, there is no need to arrange a dedicated oil cooling channel between the core part of the stator and the housing of the electric motor, which allows a further reduction of the radial size of the electric motor.

The present disclosure further relates to an oil spray ring for spraying cooling oil towards a winding head of a stator of an electric motor. The oil spray ring comprises an axially extending portion provided with a first oil spray hole, wherein the first oil spray hole sprays cooling oil towards the outer winding of the winding head, and a radially extending portion provided with a second oil spray hole, wherein the second oil spray hole sprays cooling oil towards the inner winding of the winding head, and a chamber integrally provided in the axially extending portion and the radially extending portion, for supplying the cooling oil to the first oil spray hole and the second oil spray hole.

An objective of the present disclosure is to provide an oil spray device that can cool both the outer winding and the inner winding at a winding head. An oil spray ring according to the present disclosure is not only able to spray cooling oil towards the outer winding through the first oil spray hole of the axially extending portion, thereby cooling the outer winding, but is also able to spray cooling oil towards the inner winding through the second oil spray hole of the radially extending portion, thereby cooling the inner winding.

An oil spray ring according to the present disclosure may also have one or more of the following features individually or in combination.

According to an embodiment of the present disclosure, the first oil spray hole of the axially extending portion sprays cooling oil along a first direction, and the second oil spray hole of the radially extending portion sprays cooling oil along a second direction different from the first direction. According to the above features, cooling oil used for cooling the inner winding and outer winding is sprayed in different directions onto the winding head.

According to an embodiment of the present disclosure, the first oil spray hole sprays cooling oil towards the outer winding of the winding head in a plurality of different directions; and/or the second oil spray hole sprays cooling oil towards the inner winding of the winding head in a plurality of different directions. According to the above features, the oil spray holes on the axially extending portion of the oil spray ring have different directions, and the oil spray holes on the radially extending portion of the oil spray ring have different directions.

According to an embodiment of the present disclosure, the first oil spray hole comprises a first guide portion for guiding the cooling oil sprayed through the first oil spray hole; and/or the second oil spray hole comprises a second guide portion for guiding the cooling oil sprayed through the second oil spray hole. By this structure, the cooling oil sprayed by the first/second oil spray holes is guided by the first/second guide portions, thereby being sprayed towards the outer/inner windings of the winding head, respectively.

According to an embodiment of the present disclosure, the first oil spray hole is arranged near the end of the axially extending portion, and/or the second oil spray hole is arranged near the end of the radially extending portion. In other words, the first and second oil spray holes are arranged as far away from each other as possible on the oil spray ring.

According to an embodiment of the present disclosure, the first and the second oil spray holes are arranged at the same circumferential position, or the first and second oil spray holes are offset from each other by a predetermined angle in the circumferential direction.

According to an embodiment of the present disclosure, the axially extending portion comprises a plurality of first oil spray holes uniformly distributed along the circumferential direction; and/or the radially extending portion comprises a plurality of second oil spray holes uniformly distributed along the circumferential direction.

According to an embodiment of the present disclosure, the numbers of the first and second oil spray holes are equal, or the numbers of the first and second oil spray holes are different.

According to an embodiment of the present disclosure, the oil spray ring further comprises an oil inlet hole arranged on the radial extending portion or the axially extending portion, and the oil inlet hole communicates with the chamber and supplies the cooling oil to the oil spray ring. As a result of this structure, an oil supply pipeline of an oil spray ring according to the present disclosure does not need to be arranged between the core part of the stator and the housing of the electric motor, and there is no need to increase the radial size of the electric motor.

According to an embodiment of the present disclosure, the oil spray ring is integrally formed by injection moulding. Most of existing oil spray devices are made of metal materials, such as aluminium, and are divisible into a plurality of separate parts. An oil spray ring formed by injection moulding allows a reduction of costs, a reduction of assembly difficulty, and a reduction of the weight of an electric motor.

According to an embodiment of the present disclosure, the oil spray ring is integrally injection-moulded onto a busbar of the windings of the stator. According to the above features, the oil spray ring may be supported by the busbar, without the need for a dedicated support structure inside the electric motor.

The present disclosure further relates to an electric motor, comprising an electric motor cooling arrangement and/or oil spray ring as described above.

The present disclosure further relates to a vehicle comprising the electric machine described above.

### BRIEF DESCRIPTION OF THE DRAWINGS

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The following accompanying drawings are not intended to be drawn in equal scaling according to actual size, and the focus is on showing the gist of the present disclosure.
Fig. 1 is a sectional view of an electric motor according to the present disclosure.
Fig. 2 is an enlarged view of a partial region of Fig. 1, showing in detail a winding head of the stator, an oil spray ring, and a water cooling channel on the housing.
Fig. 3 is a three-dimensional view of the oil spray ring.
Fig. 4 is a sectional view of the oil spray ring.

### DESCRIPTION OF THE EMBODIMENTS

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the art to which the present disclosure belongs. "A", "one", "said" and similar terms used in the description and claims of the patent application of the present disclosure do not mean a quantity limit, but mean that there is at least one. "Comprise", "include", or any other similar term means that the element or object appearing before the term covers the elements or objects and equivalents thereof listed after the term. Terms such as "connected" or "linked", rather than being restricted to a physical or mechanical connection, may include an electrical connection, whether direct or indirect. "Upper", "lower", "left", "right", etc. are only intended to indicate a relative positional relationship, and when the absolute position of the described object has changed, the relative positional relationship may also change accordingly. The terms "axial" and "axial direction" refer to the direction of the rotation axis X of an electric motor.

In order to facilitate description, the drawings of the present disclosure accordingly simplify or omit components commonly used in the art, such as external connection lines and other components that are irrelevant to the description of the present disclosure. These omitted or simplified components do not affect the understanding of the present disclosure by a person skilled in the art.

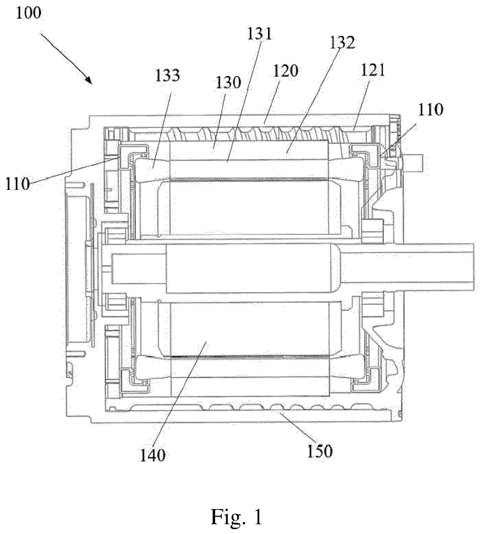

Fig. 1 is a sectional view of the electric motor 100 according to an exemplary embodiment of the present disclosure.

As shown in Fig. 1, the electric motor 100 comprises a housing 150 and a stator 130 and a rotor 140 that are accommodated in the housing 150. The stator 130 comprises a winding 131 and a core part 132, the winding 131 extending axially in a winding slot of the core part 132 and being provided with a winding head 133 that extends beyond the core part 131. For example, the electric motor 100 may be a driving electric motor for driving a vehicle to operate, with a high alternating current flowing through the winding 131 of the driving electric motor to generate an alternating magnetic field that drives the rotor 140 to rotate. The core part 132 is subjected to the alternating magnetic field, causing magnetic hysteresis losses and eddy current losses. Therefore, the winding 131 and the core part 132 of the stator 130 are the main heat generating components of the electric motor 100 and need to be cooled.

For this purpose, the electric motor 100 is provided with an electric motor cooling arrangement comprising an end oil spray assembly 110 and a water cooling assembly 120.

The end oil spray assembly 110 is arranged at both ends of the stator 130 of the electric motor 100, for spraying cooling oil towards the winding head 133 to cool the winding head 133. A portion of the cooling oil can also flow axially to cool the entire winding 131. The end oil spray assembly 110 can simultaneously spray cooling oil towards the outer winding 133a and inner winding 133b of the winding head 133. Specifically, the end oil spray assembly 110 may comprise an oil spray ring 1 and an oil supply pipeline (not shown in the drawings) for supplying oil to the oil spray ring 1. The oil spray ring 1 can simultaneously spray cooling oil towards the outer winding 133a and the inner winding 133b, and its specific structure will be described in detail below. It is conceivable that the end oil spray assembly 110 can also have other forms of spraying cooling oil towards the outer winding 133a and the inner winding 133b. For example, the end oil spray assembly 110 may comprise a plurality of oil spray rings for spraying cooling oil towards the outer winding 133a and the inner winding 133b, respectively.

The water cooling assembly 120 is arranged to at least surround the core part 132 of the stator 130. Cooling water is circulated in the water cooling assembly 120 to cool the core part 132. In the embodiment shown in Fig. 1, the water cooling assembly 120 further surrounds at least a portion of the winding head 133, which allows an increase in the design margin of the water cooling assembly 120.

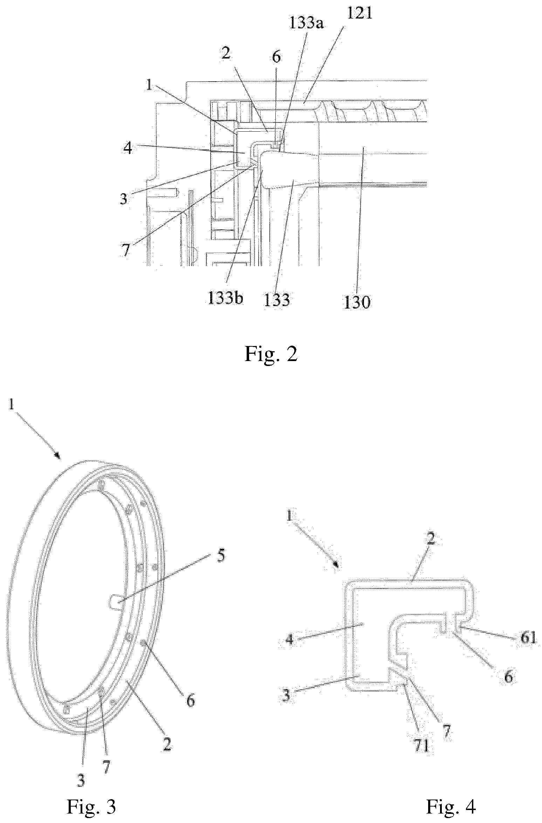

Referring to Fig. 1 and Fig. 2, the water cooling assembly 120 comprises a water cooling channel 121 provided on the housing 150 of the electric motor 100. Cooling water circulates in the water cooling channel 121 and cools the various components of the electric motor 100 accommodated in the housing 150. Therefore, with an electric motor cooling arrangement according to the present disclosure, there is no need to arrange a dedicated cooling oil passage between the housing 150 and the core part 132, which allows a further reduction of the radial size of the electric motor 100.

The oil spray ring 1 according to the present disclosure has a substantially L-shaped cross section, which is arranged at both ends of the stator 130 of the electric motor 100, for spraying cooling oil towards the winding head 133. The oil spray ring 1 comprises an axially extending portion 2, a radially extending portion 3, a chamber 4, and an oil inlet hole 5. The axially extending portion 2 is located on the radial outside of the winding head 133, and the radially extending portion 3 is located on the axial outside of the winding head 133. Preferably, the outer diameter of the axially extending portion 2 is smaller than or equal to the diameter of the core part 132, so that the radial size of the electric motor 100 will not be increased. It is understandable that the outer diameter of the axially extending portion 2 can also be slightly greater than the diameter of the core part 132.

The oil inlet hole 5 communicates with the chamber 4 and supplies the cooling oil to the oil spray ring 1. As shown in Fig. 3, the oil inlet hole 5 is arranged on the radially extending portion 3 and extends in a direction away from the winding head 133. Therefore, an oil supply pipeline for supplying the cooling oil to the oil spray ring 1 may be arranged at the axial end of the electric motor 100, so that the radial size of the electric motor 100 will not be increased.

The cooling oil enters the chamber 4 through the oil inlet hole 5, reaches the axially extending portion 2 and the radially extending portion 3, and is sprayed onto the outer winding 133a and inner winding 133b of the winding head 133 through the first oil spray hole 6 and the second oil spray hole 7, respectively. Specifically, the first oil spray hole 6 is arranged on the axially extending portion 2, which sprays cooling oil towards the outer winding 133a in a first direction, and the second oil spray hole 7 is arranged on the radially extending portion 3, which sprays cooling oil towards the inner winding 133b in a second direction different from the first direction. In the embodiment shown in Fig. 2 and Fig. 4, the first direction is a radial direction, while the second direction is at a certain angle with respect to the radial direction, so that the second direction at least comprises a component in the axial direction. Preferably, as shown in Fig. 4, the second direction further comprises a radial component from the radial outside to the radial inside, which is beneficial for the second oil spray hole 7 to spray cooling oil onto the inner winding 133b.

As shown in Fig. 4, the first oil spray hole 6 comprises a first guide portion 61 for guiding the cooling oil sprayed through the first oil spray hole 6. In the embodiment shown, the first oil spray hole 6 comprises a protrusion protruding radially from the axially extending portion 2, and the first guide portion 61 is formed by the protrusion. Therefore, the first oil spray hole 6 can have a certain length, capable of guiding cooling oil to spray in a first direction. Similarly, the second oil spray hole 7 comprises a second guide portion 71 for guiding the cooling oil sprayed through the second oil spray hole 7. The second oil spray hole 7 comprises a protrusion protruding axially from the radially extending portion 3, and the second guide portion 71 is formed by the protrusion. Therefore, the second oil spray hole 7 can have a certain length, capable of guiding cooling oil to spray in a second direction.

As shown in Fig. 3, a plurality of first oil spray holes 6 are provided on the axially extending portion 2 of the oil spray ring 1, and a plurality of second oil spray holes 7 are provided on the radially extending portion 3 of the oil spray ring 1. The numbers of first oil spray holes 6 and second oil spray holes 7 may be equal or different. These first oil spray holes 6 and second oil spray holes 7 may be uniformly or non-uniformly distributed along the circumferential direction. The first oil spray hole 6 and the second oil spray hole 7 may be arranged at the same circumferential position (as clearly indicated in Fig. 3), or may be staggered from each other by a predetermined angle. A plurality of first oil spray holes 6 can spray cooling oil in the same direction or in different directions, as long as the cooling oil is sprayed onto the outer winding 133a of the winding head 133. Similarly, a plurality of second oil spray holes 7 can spray cooling oil in the same direction or in different directions, as long as the cooling oil is sprayed onto the inner winding 133b of the winding head 133. As shown in Fig. 4, the first oil spray hole 6 is arranged near the end of the axially extending portion 2, and the second oil spray hole 7 is arranged near the end of the radially extending portion 3. This arrangement makes the first oil spray hole 6 and the second oil spray hole 7 be as far away from each other as possible, so that the cooling oil sprayed from both of them covers a larger area of the winding head 133.

The oil spray ring 1 is preferably made of a plastic material and integrally formed by injection moulding. More preferably, the oil spray ring 1 is integrally injection-moulded onto a busbar (not shown in the figure) of the winding 131 of the stator 130, thereby eliminating the need for a dedicated structure for supporting the oil spray ring 1.

According to another aspect of the present disclosure, an electric motor is proposed, comprising an electric motor cooling arrangement and/or the oil spray ring 1 as described above.

According to another aspect of the present disclosure, a vehicle is proposed, comprising the electric machine mentioned above. The vehicle may be an electrified vehicle, such as a battery electric vehicle (BEV), a hybrid electric vehicle (HEV), a plug-in hybrid electric vehicle (PHEV), a range extended EV and a fuel cell electric vehicle (FCEV). The vehicle may also be a hydrogen-powered vehicle.

Certain features, structures or characteristics in one or more embodiments of the present disclosure may be combined appropriately.

The above is a description of the present disclosure and should not be construed as a limitation thereon. Although several exemplary embodiments of the present disclosure have been described, those of ordinary skill in the art will readily understand that many modifications may be made to the exemplary embodiments without departing from the novel teaching and advantages of the present disclosure. Therefore, all such modifications are intended to be included in the scope of the present disclosure as defined by the claims. It should be understood that the above is a description of the present disclosure, that the present disclosure should not be deemed to be limited to the specific embodiments disclosed herein, and that the intention to modify the embodiments disclosed herein and other embodiments is included within the scope of the present disclosure.

## Claims

1. An electric motor cooling arrangement, **characterized in that** the electric motor cooling arrangement comprises:
an end oil spray assembly (110) arranged at both ends of a stator (130) of an electric motor (100), being used to spray cooling oil toward a winding head (133) of the stator (130) to cool the winding head (133);
a water cooling assembly (120) arranged to surround at least the core part (132) of the stator (130), and cooling water circulates in the water cooling assembly (120) to cool the core part (132) of the stator (130);
wherein the end oil spray assembly (110) sprays cooling oil toward both the outer winding (133a) and the inner winding (133b) of the winding head (133).

2. The electric motor cooling arrangement according to claim 1, **characterized in that**
the water cooling assembly (120) also surrounds at least a part of the winding head (133).

3. An oil spray ring (1) for spraying cooling oil towards a winding head (133) of a stator (130) of an electric motor (100), **characterized in that** the oil spray ring (1) comprises
an axially extending portion (2) being provided with a first oil spray hole (6), the first oil spray hole (6) sprays cooling oil toward an outer winding (133a) of the winding head (133);
a radially extending portion (3) being provided with a second oil spray hole (7), the second oil spray hole (7) sprays cooling oil toward an inner winding (133b) of the winding head (133),
a chamber (4) integrally provided in the axial extension part (2) and the radial extension part (3), and being used for supplying the cooling oil to the first oil spray hole (6 ) and the second oil spray hole (7).

4. The oil spray ring (1) according to claim 3, **characterized in that**,
the first oil spray hole (6) of the axially extending portion (2) sprays the cooling oil along a first direction, and the second oil spray hole (7) of the radially extending portion (3) sprays the cooling oil along a second direction different from the first direction.

5. The oil spray ring (1) according to claim 4, **characterized in that**,
the first direction is a radial direction and the second direction at least comprise a component in the axial direction.

6. The oil spray ring (1) according to claim 3, **characterized in that**,
the first oil spray hole (6) sprays cooling oil toward the outer winding (133a) of the winding head (133) along multiple different directions; and/or
the second oil spray hole (7) sprays cooling oil toward the inner winding (133b) of the winding head (133) along multiple different directions.

7. The oil spray ring (1) according to any one of claims 3 to 6, **characterized in that**,
the first oil spray hole (6) includes a first guide portion (61) for guiding the cooling oil sprayed through the first oil spray hole (6); and/or
the second oil spray hole (7) includes a second guide portion (71) for guiding the cooling oil sprayed through the second oil spray hole (7)

8. The oil spray ring (1) according to any one of claims 3 to 6, **characterized in that**,
the first oil spray hole (6) is arranged close to an end of the axial extending portion (2), and/or
the second oil spray hole (7) is arranged close to an end of the radially extending portion (3).

9. The oil spray ring (1) according to any one of claims 3 to 6, **characterized in that**,
the first oil spray hole (6) and the second oil spray hole (7) are arranged at the same circumferential position, or the first oil spray hole (6) and the second oil spray hole (7) are offset from each other by a predetermined angle in the circumferential direction.

10. The oil spray ring (1) according to any one of claims 3 to 6, **characterized in that**,
the axially extending portion (2) comprises a plurality of first oil spray holes (6) uniformly distributed along the circumferential direction; and/or
the radially extending portion (3) comprises a plurality of second oil spray holes (7) uniformly distributed along the circumferential direction.

11. The oil spray ring (1) according to claim 9, **characterized in that**,
the numbers of the first oil spray hole (6) and the second oil spray hole (7) are equal, or the numbers of the first oil spray hole (6) and the second oil spray hole (7) are different.

12. The oil spray ring (1) according to any one of claims 3 to 6, **characterized in that**,
the oil spray ring (1) further comprises an oil inlet hole (5) arranged on the radially extending portion (3) or the axially extending portion (2), and the oil inlet hole (5) communicates with the chamber (4) and supply the cooling oil to the oil spray ring (1).

13. The oil spray ring (1) according to any one of claims 3 to 6, **characterized in that**,
the oil spray ring (1) is integrally injection-molded on a bus bar of the winding of the stator (130).

14. An electrical motor (100) comprising the electrical motor cooling arrangement according to any one of claims 1-3 and/or the oil spray ring (1 ) according to any one of claims 4-13.

15. A vehicle comprising an electric motor (100) according to claim 14.
